# EUROPEAN PATENT APPLICATION

(11) **EP 4 249 893 A1**
(43) Date of publication of application: **27.09.2023**
(21) Application number: 21894431.2
(22) Date of filing: 26.10.2021
(51) Int. Cl.: G01N 15/14, G01N 21/27

(54) **BIOLOGICAL SAMPLE ANALYSIS SYSTEM, INFORMATION PROCESSING DEVICE, INFORMATION PROCESSING METHOD, AND BIOLOGICAL SAMPLE ANALYSIS METHOD**

(30) Priority: 18.11.2020 JP 2020191481
(71) Applicant: Sony Group Corporation, Tokyo 108-0075 (JP); Sony Semiconductor Solutions Corporation, Atsugi-shi, Kanagawa 243-0014 (JP)
(72) Inventor: FURUKAWA, Akio, Tokyo 108-0075 (JP); MIYATANI, Yoshitaka, Atsugi-shi, Kanagawa 243-0014 (JP)
(74) Representative: D Young & Co LLP
(86) International application number: PCT/JP2021/039392
(87) International publication number: WO 2022/107557

(57) **Abstract**

A clearer image is acquired while redundancy of analysis time is suppressed. A biological sample analysis system according to an embodiment includes: an irradiation unit (101) that irradiates a bioparticle in a biological sample with light; a detection unit (102) including a plurality of pixels that each detects, as an event, a luminance change of light emitted from the bioparticle by irradiation with the light; and a processing unit (103) that generates bioparticle information regarding the bioparticle on the basis of the event detected by each of the pixels.

## Description

### Field

The present disclosure relates to a biological sample analysis system, an information processing device, an information processing method, and a biological sample analysis method.

### Background

Conventionally, as a method for analyzing a protein of biologically relevant microparticles such as cells, microorganisms, and liposomes, there is flow cytometry. A device used for the flow cytometry is referred to as a flow cytometer (FCM). In the flow cytometer, microparticles flowing in a flow channel in a line are irradiated with laser light having a specific wavelength, light such as fluorescence, forward scattered light, or side scattered light emitted from each of the microparticles is converted into an electrical signal by a photodetector to be quantified, and a result thereof is statistically analyzed, thereby determining the type, size, structure, and the like of each of the microparticles.

In recent years, a so-called imaging flow cytometer (IFCM) that acquires a two-dimensional image of fluorescence emitted from a microparticle by an image sensor has been developed.

### Citation List

### Patent Literature

Patent Literature 1: US 6211955 B2

### Summary

### Technical Problem

However, since fluorescence emitted from a microparticle is very weak, a conventional imaging flow cytometer cannot acquire a clear image with sufficient brightness, and it is difficult to improve analysis accuracy of the microparticle.

In recent years, a so-called time delay integration (TDI)-CCD method imaging flow cytometer that transfers an exposure value of a CCD to an adjacent line and integrates the exposure value in synchronization with a cell speed has been developed (see, for example, Patent Literature 1). However, in this method, since an imageable cell speed is limited by a data size of an image and a transfer band, it is necessary to reduce the speed of a cell flowing in a flow channel. Therefore, in the TDI-CCD method, the number of samples that can be observed per unit time is limited, and as a result, there is a problem that analysis time is redundant.

Therefore, the present disclosure proposes a biological sample analysis system, an information processing device, an information processing method, and a biological sample analysis method capable of improving analysis accuracy while suppressing redundancy of analysis time.

### Solution to Problem

To solve the problems described above, a biological sample analysis system according to an embodiment of the present disclosure includes: an irradiation unit that irradiates a bioparticle in a biological sample with light; a detection unit including a plurality of pixels that each detects, as an event, a luminance change of light emitted from the bioparticle by irradiation with the light; and a processing unit that generates bioparticle information regarding the bioparticle on a basis of the event detected by each of the pixels.

### Brief Description of Drawings

FIG. 1 is a schematic diagram illustrating a configuration example of a biological sample analysis device according to the present disclosure.
FIG. 2 is a block diagram illustrating a more specific configuration example of a biological sample analysis device according to an embodiment of the present disclosure.
FIG. 3 is a block diagram illustrating a schematic configuration example of an EVS device according to the embodiment of the present disclosure.
FIG. 4 is a diagram for explaining an event detected for each position in an image of a bioparticle in the embodiment of the present disclosure.
FIG. 5 is a diagram for explaining an operation example of a TDI-EVS method according to the embodiment of the present disclosure (part 1).
FIG. 6 is a diagram for explaining an operation example of the TDI-EVS method according to the embodiment of the present disclosure (part 2).
FIG. 7 is a diagram for explaining an operation example of the TDI-EVS method according to the embodiment of the present disclosure (part 3).
FIG. 8 is a diagram for explaining an operation example of the TDI-EVS method according to the embodiment of the present disclosure (part 4).
FIG. 9 is a diagram illustrating an example of a relationship between an event detection threshold and noise.
FIG. 10 is a flowchart illustrating an operation example according to the embodiment of the present disclosure.
FIG. 11 is a flowchart illustrating a more detailed operation example of an event stream acquisition operation illustrated in step S105 of FIG. 10.
FIG. 12 is a flowchart illustrating a more detailed operation example of a bioparticle information generation operation illustrated in step S106 of FIG. 10.
FIG. 13 is a block diagram illustrating a partial configuration example of a biological sample analysis device according to a first modification of the embodiment of the present disclosure.
FIG. 14 is a block diagram illustrating a partial configuration example of a biological sample analysis device according to a second modification of the embodiment of the present disclosure.
FIG. 15 is a hardware configuration diagram illustrating an example of a computer that implements functions of an information processing device according to the present disclosure.

### Description of Embodiments

Hereinafter, an embodiment of the present disclosure will be described in detail with reference to the drawings. Note that in the following embodiment, the same portion is denoted by the same reference numeral, and redundant description will be omitted.

In addition, the present disclosure will be described according to the following item order.
1. Introduction
2. System configuration example of biological sample analysis device
3. Embodiment
3.1 System configuration example
3.2 Schematic configuration example of EVS device
3.3 Example of TDI-EVS method
3.4 Relationship between event detection threshold and noise
3.5 Example of operation flow
3.5.1 Example of event stream acquisition operation flow
3.5.2 Example of bioparticle information generation operation flow
3.6 Example of specific numerical value
3.7 Summary
3.8 Modification
3.8.1 First modification
3.8.2 Second modification
3.8.3 Third modification
3.8.4 Fourth modification
3.8.5 Fifth modification
3.8.6 Sixth modification
4. Hardware configuration

### 1. Introduction

As described above, in a TDI-CCD method imaging flow cytometer that transfers an exposure value of a CCD to an adjacent line and integrates the exposure value in synchronization with a cell speed, an imageable cell speed is limited by a data size of an image and a transfer band. Therefore, the number of samples that can be observed per unit time is limited, and as a result, there is a problem that analysis time is redundant.

Specifically, in a conventional TDI-CCD method imaging flow cytometer, for example, as disclosed in Patent Literature 2, by acquiring light reception amounts of all pixels on a line orthogonal to a cell moving direction in an image sensor and adding the light reception amounts for each line at a timing synchronized with a cell speed, that is, integrating the light reception amounts, it is possible to acquire a favorable cell image in which there is no blur due to movement of the cell and random noise having no correlation with the cell speed is reduced. Meanwhile, a necessary data transfer amount is (the number of pixels per line) × (the number of pixel bits) × (line rate).

The line rate is a value synchronized with a speed at which the cell image moves on the image sensor. Here, when the number of pixels and the pixel depth per line are 128 pixels and 8 bits, respectively, which are minimum required for cell analysis, a data transfer amount per line is 128 × 8 = 1024 bits of the line rate. Therefore, the line rate is limited to about 1/1000 of a data transfer band of the image sensor.

For example, a maximum line rate of an image sensor having a data transfer band of 40 Gbps (gigabits/second) is about 40 kHz (kilohertz), and assuming that resolution in a moving direction of a cell is 0.5 µm (micrometers) that is minimum required for cell analysis, an imageable maximum cell speed is (5 × 10⁻⁷ m) × 40 kHz = 0.02 m/s (meters/second). This is 1/50 to 1/250 of a cell speed of 1 to 5 m/s used in a normal flow cytometer that performs analysis with fluorescence intensity or scattered light intensity by a cell without using imaging, and it cannot be said that this is a sufficient imageable cell speed. Note that this case uses a TDI-CCD method, but the same applies to a case using a TDI-CMOS method in which a CMOS image sensor is adopted as an image sensor.

Therefore, in the following embodiment, an event-based vision sensor (EVS) that outputs coordinates of a pixel in which a luminance (also referred to as light intensity) change has been detected, a direction (polarity) of the luminance change, and time (event data) in a synchronous or asynchronous manner is used as a sensor (detection unit) for acquiring information regarding a bioparticle (hereinafter, also referred to as bioparticle information). As a result, a data size of bioparticle information to be transferred can be largely reduced. Therefore, the limitation on the number of samples that can be observed per unit time is largely relaxed, and as a result, redundancy of analysis time can be suppressed.

Note that the bioparticle information may include at least one of image data of a bioparticle reconstructed from event data (bioparticle image described later), a feature amount such as the shape, the size, or the color of a bioparticle extracted from the event data or the image data of the bioparticle, a speed (which may be a relative speed) of the bioparticle generated from the event data, the image data of the bioparticle, the feature amount of the bioparticle, or the like, attribute information indicating normality/abnormality or the like, and the like.

In addition, in the following embodiment, an imaging method similar to the TDI method is implemented using EVS. Hereinafter, this method is also referred to as a TDI-EVS method. By using EVS in an imaging method similar to the TDI method, it is possible to acquire bioparticle information with reduced noise or the like. For example, it is possible to acquire a clear image (hereinafter, also referred to as a bioparticle image) with sufficient brightness including the bioparticle. As a result, it is possible to improve analysis accuracy while suppressing redundancy of analysis time.

### 2. System configuration example of biological sample analysis device

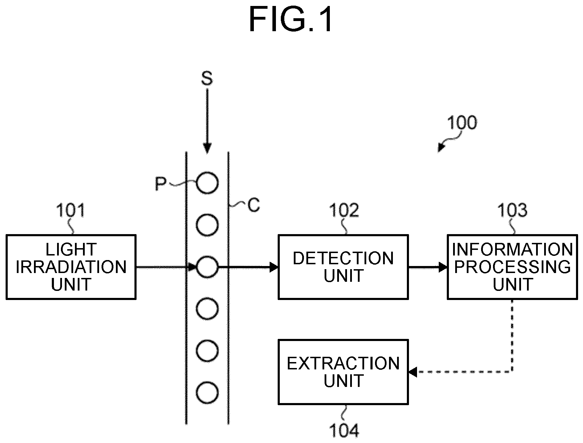

FIG. 1 illustrates a configuration example of a biological sample analysis device according to the present disclosure. A biological sample analysis device 100 illustrated in FIG. 1 includes a light irradiation unit 101 that irradiates a biological sample S flowing through a flow channel C with light, a detection unit 102 that detects light generated by the irradiation, and an information processing unit 103 that processes information regarding the light detected by the detection unit 102. Examples of the biological sample analysis device 100 include a flow cytometer and an imaging flow cytometer. The biological sample analysis device 100 may include an extraction unit 104 that extracts a specific bioparticle P in the biological sample S. Examples of the biological sample analysis device 100 including the extraction unit 104 include a cell sorter.

### (Biological sample)

The biological sample S may be a liquid sample containing the bioparticle P. The bioparticle P is, for example, a cell or a non-cellular bioparticle. The cell may be a living cell, and more specific examples thereof include a blood cell such as a red blood cell or a white blood cell, and a germ cell such as a sperm or a fertilized egg. The cell may be directly collected from a specimen such as whole blood, or may be a cultured cell obtained after culturing. Examples of the non-cellular bioparticle include an extracellular vesicle, particularly an exosome and a microvesicle. The bioparticle P may be labeled with one or more labeling substances (for example, a dye (particularly, a fluorescent dye) and a fluorescent dye labeled antibody). Note that the biological sample analysis device 100 of the present disclosure may analyze a particle other than the bioparticle, and may analyze a bead or the like for calibration or the like.

### (Flow channel)

The flow channel C can be configured such that the biological sample S flows, particularly, a flow in which the bioparticles P contained in the biological sample S are arranged in a substantially line is formed. A flow channel structure including the flow channel C may be designed such that a laminar flow is formed, and particularly, is designed such that a laminar flow in which a flow of the biological sample S (sample flow) is wrapped by a flow of a sheath liquid is formed. The design of the flow channel structure may be appropriately selected by a person skilled in the art, and a known flow channel structure may be adopted. The flow channel C may be formed in a flow channel structure such as a microchip (chip having a flow channel on the order of micrometers) or a flow cell. The width of the flow channel C is 1 mm (millimeter) or less, and may be particularly 10 µm (micrometers) or more and 1 mm or less. The flow channel C and the flow channel structure including the flow channel C may be made of a material such as plastic or glass.

The device of the present disclosure may be configured such that the biological sample S flowing in the flow channel C, particularly, the bioparticle P in the biological sample S is irradiated with light from the light irradiation unit 101. The device of the present disclosure may be configured such that an irradiation point of light with respect to the biological sample S is in the flow channel structure in which the flow channel C is formed, or may be configured such that the irradiation point of light is outside the flow channel structure. Examples of the former include a configuration in which the flow channel C in a microchip or a flow cell is irradiated with the light. In the latter, the bioparticle P after exiting the flow channel structure (particularly, a nozzle portion thereof) may be irradiated with the light, and examples thereof include a jet in air method flow cytometer.

### (Light irradiation unit)

The light irradiation unit 101 includes a light source unit that emits light and a light guide optical system that guides the light to the flow channel C. The light source unit includes one or more light sources. The type of light source can be, for example, a laser light source or a light emitting diode (LED). The wavelength of light emitted from each light source may be a wavelength of ultraviolet light, a wavelength of visible light, or a wavelength of infrared light. The light guide optical system includes, for example, an optical component such as a beam splitter group, a mirror group, or an optical fiber. In addition, the light guide optical system may include a lens group for condensing light, and can include, for example, an objective lens. The number of irradiation points of light with respect to the biological sample S may be one or more. The light irradiation unit 101 may be configured to condense light emitted from one or more different light sources on one irradiation point.

### (Detection unit)

The detection unit 102 includes at least one photodetector that detects light generated by irradiating a particle with light by the light irradiation unit 101. The light to be detected is, for example, fluorescence, scattered light (for example, any one or more of forward scattered light, backward scattered light, and side scattered light), transmitted light, or reflected light. Each of the photodetectors includes one or more light receiving elements, and has, for example, a light receiving element array. Each of the photodetectors may include, as a light receiving element, one or more photodiodes such as a photomultiplier tube (PMT) and/or an avalanche photodiode (APD) and a multi-pixel photon counter (MPPC). The photodetector includes, for example, a PMT array in which a plurality of PMT is arranged in a one-dimensional direction. In addition, the detection unit 102 may include an imaging element such as a charge coupled device (CCD) or a complementary metal-oxide-semiconductor (CMOS). The detection unit 102 can acquire bioparticle information regarding the bioparticle P by the imaging element.

As described above, the bioparticle information can include at least one of the bioparticle image of the bioparticle, the feature amount of the bioparticle, the attribute information of the bioparticle, and the like. In addition, the bioparticle image of the bioparticle may include, for example, a bright field image, a dark field image, or a fluorescence image.

The detection unit 102 includes a detection optical system that causes light having a predetermined detection wavelength to reach a corresponding photodetector. The detection optical system includes a spectroscopic unit such as a prism or a diffraction grating, or a wavelength separation unit such as a dichroic mirror or an optical filter. The detection optical system may be configured, for example, to disperse light from the bioparticle P and to detect light in different wavelength ranges by a plurality of photodetectors having a number larger than the number of fluorescent dyes. A flow cytometer including such a detection optical system is referred to as a spectral type flow cytometer. In addition, for example, the detection optical system may be configured to separate light corresponding to a fluorescence wavelength range of a fluorescent dye from light from the bioparticle P, and to cause a corresponding photodetector to detect the separated light.

In addition, the detection unit 102 can include a signal processing unit that converts an electrical signal obtained by the photodetector into a digital signal. The signal processing unit may include an A/D converter as a device that performs the conversion. The digital signal obtained by the conversion by the signal processing unit can be transmitted to the information processing unit 103. The digital signal can be handled as data regarding light (hereinafter, also referred to as "optical data") by the information processing unit 103. The optical data may be, for example, optical data including fluorescence data. More specifically, the optical data may be light intensity data, and the light intensity may be light intensity data of light including fluorescence (may include a feature amount such as area, height, or width).

### (Information processing unit)

The information processing unit 103 includes, for example, a processing unit that executes processing of various types of data (for example, optical data) and a storage unit that stores various types of data. When acquiring optical data corresponding to a fluorescent dye from the detection unit 102, the processing unit can perform fluorescence leakage correction (compensation processing) on light intensity data. In addition, in a case of a spectral type flow cytometer, the processing unit executes fluorescence separation processing on the optical data and acquires light intensity data corresponding to a fluorescent dye.

The fluorescence separation processing may be performed by, for example, an unmixing method described in JP 2011-232259 A. When the detection unit 102 includes an imaging element, the processing unit may acquire form information of the bioparticle P on the basis of an image acquired by the imaging element. The storage unit may be configured to be able to store the acquired optical data. The storage unit may be further configured to be able to store spectral reference data used in the unmixing processing.

When the biological sample analysis device 100 includes the extraction unit 104 described later, the information processing unit 103 can determine whether to extract the bioparticle P on the basis of the optical data and/or the form information. Then, the information processing unit 103 controls the extraction unit 104 on the basis of the determination result, and the bioparticle P can be extracted by the extraction unit 104.

The information processing unit 103 may be configured to be able to output various types of data (for example, optical data and an image). For example, the information processing unit 103 can output various types of data (for example, a two-dimensional plot, a spectral plot, and the like) generated on the basis of the optical data. In addition, the information processing unit 103 may be configured to be able to receive inputs of various types of data, and for example, receives gating processing on a plot by a user. The information processing unit 103 can include an output unit (for example, a display) or an input unit (for example, a keyboard) for executing the output or the input.

The information processing unit 103 may be configured as a general-purpose computer, and may be configured as an information processing device including, for example, a central processing unit (CPU), a random access memory (RAM), and a read only memory (ROM). The information processing unit 103 may be included in a housing including the light irradiation unit 101 and the detection unit 102, or may be outside the housing. In addition, various types of processing or functions by the information processing unit 103 may be implemented by a server computer or a cloud connected thereto via a network.

### (Extraction unit)

The extraction unit 104 can extract the bioparticle P, for example, according to a determination result by the information processing unit 103. An extraction method may be a method for generating a droplet containing the bioparticle P by vibration, applying a charge to the droplet to be extracted, and controlling a traveling direction of the droplet by an electrode. The extraction method may be a method for controlling the traveling direction of the bioparticle P in the flow channel structure and extracting the bioparticle P. The flow channel structure includes, for example, a control mechanism by pressure (injection or suction) or charge. Examples of the flow channel structure include a chip having a flow channel structure in which the flow channel C branches into a collection flow channel and a waste liquid flow channel on a downstream side thereof, in which the specific bioparticle P is collected into the collection flow channel (for example, a chip described in JP 2020-76736 A) .

### 3. Embodiment

Next, an embodiment according to the present disclosure will be described in detail with reference to the drawings.

### 3.1 System configuration example

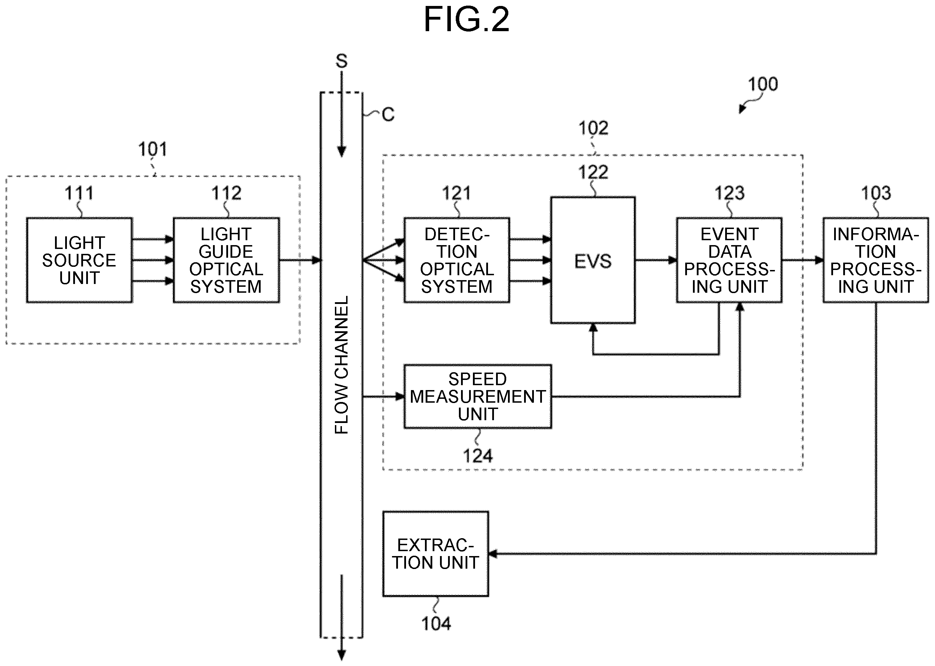

FIG. 2 is a block diagram illustrating a more specific configuration example of a biological sample analysis device according to the present embodiment. Note that, in the present embodiment and the following embodiment, the biological sample analysis device may be configured as a system in which a plurality of devices is combined.

As illustrated in FIG. 2, a biological sample analysis device 100 according to the present embodiment includes: a light source unit 111 and a light guide optical system 112 constituting a light irradiation unit 101; a detection optical system 121, an EVS device 122, an event data processing unit 123, and a speed measurement unit 124 constituting a detection unit 102; an information processing unit 103, and an extraction unit 104, and observes an image of fluorescence, reflected light, and/or transmitted light emitted from the bioparticle P in the biological sample S flowing through the flow channel C. Note that the light source unit 111, the light guide optical system 112, the detection optical system 121, the information processing unit 103, and the extraction unit 104 may be similar to those described above with reference to FIG. 1.

More specifically, light (hereinafter, also referred to as excitation light) output from the light source unit 111 is condensed by the light guide optical system 112. The condensed light is emitted to the bioparticle P flowing at a high speed in the flow channel C through which the biological sample S in which the bioparticle P floats is flowing. Reflected light or transmitted light and/or fluorescence emitted from the bioparticle P irradiated with light is imaged on a light receiving surface of the EVS device 122 through the detection optical system 121.

### (EVS)

The EVS device 122 includes pixels (hereinafter, referred to as event pixels), for example, arranged in a two-dimensional lattice pattern, details of which will be described later. Each of the event pixels detects an event on the basis of a luminance change of incident light. The EVS device 122 outputs event data including position information (X address and Y address) of a pixel that has detected the event, polarity information (positive event/negative event) of the detected event, information of time (time stamp) when the event has been detected, and the like.

A series of event data (hereinafter, also referred to as an event stream) generated in the pixels corresponding to the image of the bioparticle P moving on the light receiving surface of the EVS device 122 is sent to the event data processing unit 123.

### (Speed measurement unit)

The speed measurement unit 124 measures, for example, a relative speed of the bioparticle P flowing through the flow channel C with respect to the speed measurement unit 124. In the present example, since a case where the speed measurement unit 124 is stationary with respect to the flow channel C is exemplified, in the following description, it is described that the speed measurement unit 124 measures a speed of the bioparticle P.

The speed measurement unit 124 may adopt various detection methods capable of detecting the speed of the bioparticle P, such as an electrostatic method and an optical method. The speed of the bioparticle P detected by the speed measurement unit 124 is sent to the event data processing unit 123 as needed.

Note that the speed measurement unit 124 may be omitted when the speed of the bioparticle P is known, for example, when the speed of the bioparticle P flowing through the flow channel C is controlled to be maintained at a desired speed by controlling a pump system that delivers the biological sample S. Note that, even when the speed of the bioparticle P is known, the speed of the bioparticle P may fluctuate due to ambient temperature, a resistance change of a liquid delivery system, or the like. Therefore, the speed of the bioparticle P may be actually measured using the speed measurement unit 124.

### (Event data processing unit)

The event data processing unit 123 reconstructs frame data of the image of the bioparticle P from the event stream input from the EVS device 122 and the speed of the bioparticle P, and sends the reconstructed frame data to the information processing unit 103.

Note that a speed change of the bioparticle P is sufficiently gentle as compared with an arrival frequency of the bioparticle P. Therefore, the speed of the bioparticle P used for reconstructing the frame data is not limited to the speed of the bioparticle P itself included in the frame data to be reconstructed, and may be a speed, an average value, or the like of the bioparticle P arriving before and/or after arrival of the bioparticle P included in the frame data to be reconstructed.

The information processing unit 103 analyzes the frame data input from the event data processing unit 123, and executes correction to offset rotation of the bioparticle P moving in the flow channel C, extraction of a feature amount of the bioparticle P, discrimination of the type of the bioparticle P, and the like. In addition, the information processing unit 103 may include a display unit, and may present bioparticle information used for analysis, a feature amount based on a result of the analysis, statistical data, a type discrimination result, and the like to a user. Furthermore, the information processing unit 103 may discriminate and collect the specific type of bioparticle P by controlling the extraction unit 104 on the basis of the bioparticle P type discrimination result.

### 3.2 Schematic configuration example of EVS device

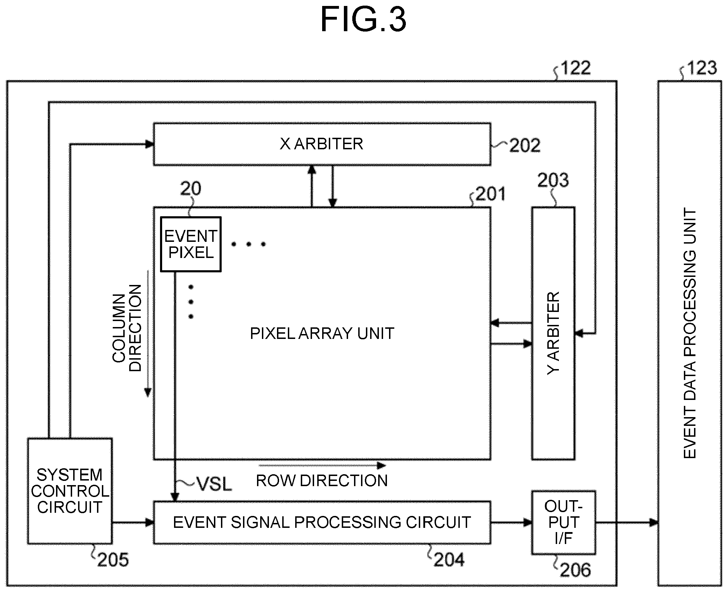

Next, a schematic configuration example of the EVS device 122 will be described. FIG. 3 is a block diagram illustrating a schematic configuration example of the EVS device according to the present embodiment. As illustrated in FIG. 3, the EVS device 122 includes a pixel array unit 201, an X arbiter 202, a Y arbiter 203, an event signal processing circuit 204, a system control circuit 205, and an output interface (I/F) 206.

The pixel array unit 201 has a configuration in which a plurality of event pixels 20 each of which detects an event on the basis of a luminance change of incident light is arranged in a two-dimensional lattice pattern. Note that, in the following description, a row direction refers to an arrangement direction of pixels in a pixel row (lateral direction in the drawings), and a column direction refers to an arrangement direction of pixels in a pixel column (longitudinal direction in the drawings).

Each event pixel 20 includes a photoelectric conversion element that generates a charge according to a luminance of incident light. When detecting a luminance change of incident light on the basis of a photocurrent flowing out from the photoelectric conversion element, each event pixel 20 outputs a request for requesting reading from the event pixel 20 itself to the X arbiter 202 and the Y arbiter 203, and outputs an event signal indicating that an event has been detected according to arbitration by the X arbiter 202 and the Y arbiter 203.

Each event pixel 20 detects presence or absence of an event on the basis of whether or not a change exceeding a predetermined threshold has occurred in the photocurrent according to the luminance of incident light. For example, each event pixel 20 detects that the luminance change exceeds a predetermined threshold (positive event) or falls below the predetermined threshold (negative event) as an event.

When detecting an event, the event pixel 20 outputs a request for requesting permission to output an event signal indicating occurrence of the event to each of the X arbiter 202 and the Y arbiter 203. Then, when receiving a response indicating permission to output the event signal from each of the X arbiter 202 and the Y arbiter 203, the event pixel 20 outputs the event signal to the event signal processing circuit 204.

The X arbiter 202 and the Y arbiter 203 arbitrate a request for requesting output of an event signal supplied from each of the plurality of event pixels 20, and transmit a response based on the arbitration result (permission/non-permission to output the event signal) and a reset signal for resetting the event detection to the event pixel 20 that has output the request.

The event signal processing circuit 204 generates and outputs event data by executing predetermined signal processing on the event signal input from the event pixel 20.

As described above, the change in the photocurrent generated in the event pixel 20 can also be regarded as a light amount change (luminance change) of light incident on a photoelectric conversion unit of the event pixel 20. Therefore, it can also be said that the event is a light amount change (luminance change) of the event pixel 20 exceeding a predetermined threshold. The event data indicating occurrence of an event includes at least position information such as coordinates indicating the position of the event pixel 20 where the light amount change as an event has occurred. The event data can include a polarity of a light amount change in addition to the position information.

For a series of event data output at a timing when an event occurs from the event pixel 20, it can be said that the event data implicitly includes time information indicating a relative time when the event occurs as long as an interval between pieces of event data is maintained so as to be the same as the interval when the event occurs.

Note that, when the interval between pieces of event data is not maintained so as to be the same as the interval when the event occurs due to storage of the event data in a memory or the like, the time information implicitly included in the event data is lost. Therefore, before the interval between pieces of event data is not maintained so as to be the same as the interval when the event occurs, the event signal processing circuit 204 may add time information indicating a relative time at which an event such as a time stamp has occurred to the event data.

### (Other configurations)

The system control circuit 205 includes a timing generator that generates various timing signals, and the like, and performs drive control of the X arbiter 202, the Y arbiter 203, the event signal processing circuit 204, and the like on the basis of various timings generated by the timing generator.

The output I/F 206 sequentially outputs event data output in units of rows from the event signal processing circuit 204 to the event data processing unit 123 as an event stream.

### 3.3 Example of TDI-EVS method

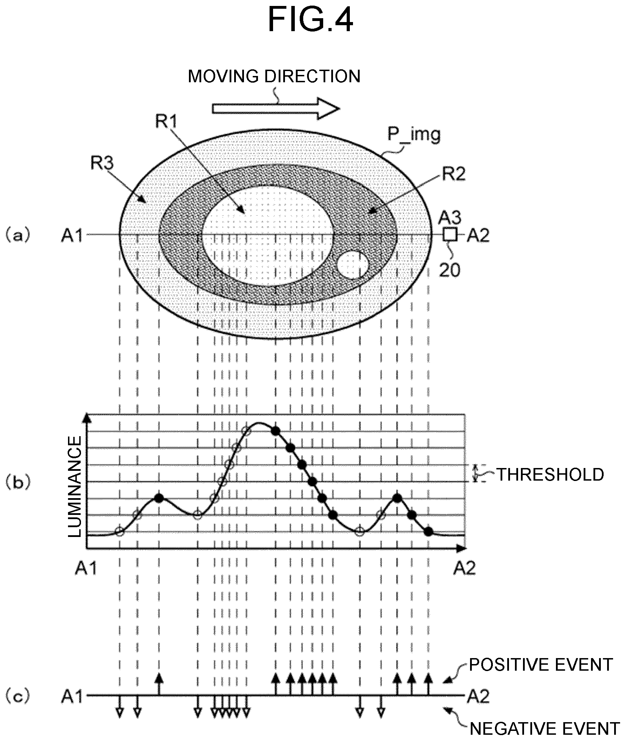

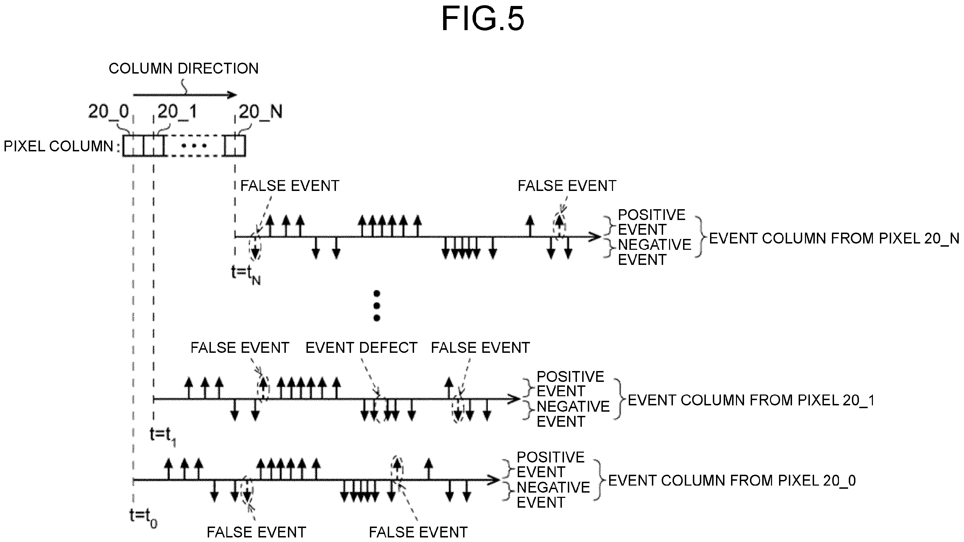

Next, an operation example of the TDI-EVS method according to the present embodiment will be described. FIG. 4 is a diagram for explaining an event detected for each position in an image of a bioparticle, and FIGS. 5 to 8 are diagrams for explaining operation examples of the TDI-EVS method according to the present embodiment.

Note that, in the following description, a case where the moving direction of the bioparticle P coincides with the column direction is exemplified, but the present disclosure is not limited thereto, and the moving direction of the bioparticle P may coincide with the row direction. In this case, a pixel column in the following description is replaced with a pixel row, and a column direction is replaced with a row direction. Note that the pixel column may be a column of the event pixels 20 arranged in the column direction, and the pixel row may be a column of the event pixels 20 arranged in the row direction.

In FIG. 4, (a) illustrates an image P_img of the bioparticle P imaged on a light receiving surface of the EVS device 122 and a moving direction D thereof, (b) illustrates a luminance of the image P_img along a line segment A1-A2, and (c) illustrates an example of an event detected along the line segment A1-A2 when the image P_img moves in the moving direction.

In this example, the luminance distribution along the line segment A1-A2 in the image P_img of the bioparticle P illustrated in (a) of FIG. 4 is assumed to be a distribution in which the luminance of a region R1 as a center nucleus is the highest, the luminance of a region R2 outside the region R1 is slightly low, and the luminance of a region R3 as a film in an outer peripheral portion is slightly high, as illustrated in (b). In this case, when the image P_img moves in the moving direction so as to pass through the event pixel 20 located at a point A3 on the line segment A1-A2, as illustrated in (c) of FIG. 4, the event pixel 20 located at the point A3 on the line segment A1-A2 detects a positive event at a position on the line segment A1-A2 where the luminance has risen by a predetermined threshold (hereinafter, referred to as an event detection threshold) or more, and detects a negative event at a position on the line segment A1-A2 where the luminance has fallen by the event detection threshold or more.

FIG. 5 illustrates a case where detection of the event column exemplified in FIG. 4 is applied to a pixel column arranged in a column direction parallel to the moving direction of the image P_img. FIG. 5 illustrates an example of an event column detected in event pixels 20_0 to 20_N of the pixel column corresponding to the line segment A1-A2 when the image P_img of the bioparticle P illustrated in (a) of FIG. 4 moves in the column direction of the pixel array unit 201. Note that the pixel column is not limited to the array of two or more event pixels 20, and may be one event pixel 20.

As illustrated in FIG. 5, in each of the event pixels 20_0 to 20_N in the pixel column corresponding to the line segment A1-A2, the event column exemplified in (c) of FIG. 4 is detected. Note that, in each event column, a false event in which occurrence of an event is erroneously detected even though the event has not occurred or an event defect in which an event has not been detected even though the event has originally occurred is included as noise. Usually, such a false event or an event defect occurs randomly.

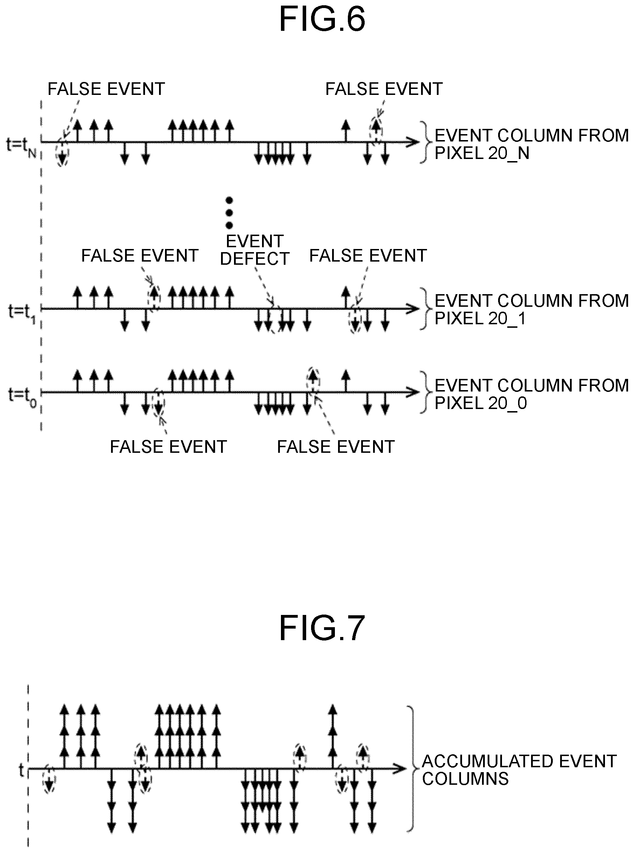

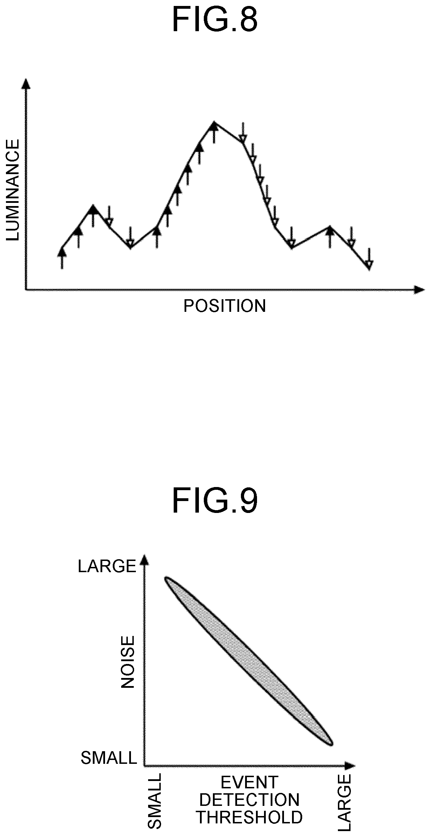

Therefore, in the present embodiment, as illustrated in FIG. 6, times of the event streams, which are columns of event data obtained by converting the event columns detected by the event pixels 20_0 to 20_N into data, are aligned, and the event streams with the aligned times are added (also referred to as superimposed) on a time axis. In that case, as illustrated in FIG. 7, a correct positive event and a correct negative event detected according to the luminance change are accumulated, and a random false event and a random event defect are not accumulated. As a result, as illustrated in FIG. 8, it is possible to reconstruct the luminance change based on the correct positive event and the correct negative event.

Note that, in the reconstruction of the luminance change, for example, the luminance change along the line segment A1-A2 of the bioparticle P may be reconstructed by increasing a luminance value in the positive event and dividing the luminance value in the negative event in time series. Note that the present disclosure is not limited thereto. For example, various methods such as a method for determining a luminance gradient between events on the basis of an event occurrence interval in time series and reconstructing a luminance change along the line segment A1-A2 of the bioparticle P using the luminance gradient, and a determination method by machine learning using an event stream before or after addition as an input and a luminance change as an output may be used.

Arrival of the image P_img at the event pixel 20 (hereinafter, referred to as a head pixel) at which the image P_img of the bioparticle P arrives first in the pixel column can be detected, for example, by monitoring the event stream of the head pixel output from the EVS device 122. The arrival of the image P_img at the head pixel can be detected, for example, from an occurrence frequency or an occurrence pattern of an event in the event stream of the head pixel.

Furthermore, a shift amount of time for aligning the times of the event streams can be executed on the basis of, for example, the speed of the bioparticle P measured by the speed measurement unit 124 and the interval between the event pixels 20 in the moving direction of the bioparticle P. That is, moving time between the pixels of the image P_img of the bioparticle P is calculated from the speed of the bioparticle P and the pitch of the event pixel 20, and the time stamps in the event data of the event streams are adjusted using the moving time as the shift amount, whereby the times of the event streams can be aligned.

Note that aligning the times of the event streams is not limited to the above method, and various modifications may be made. For example, a method for detecting the arrival of the image P_img of the bioparticle P in each event pixel 20 in the same pixel column and using the detected difference in time as a shift amount may be used. In this case, since the shift amount (for example, an initial value of the shift amount) can be calculated by calculation on the basis of accurate time stamp information, an effect such as reduction in signal processing cost can be expected.

In addition, the moving speed of the image P_img of the bioparticle P is considered to be equivalent in two or more pixel columns. Therefore, the shift amount may be determined on the basis of, for example, an average value of differences in time at which arrivals of the image P_img have been detected in the two or more pixel columns.

### 3.4 Relationship between event detection threshold and noise.

As described above, in the present embodiment, the luminance change is reconstructed on the basis of the positive event and the negative event. Therefore, in order to obtain the number of gradations (luminance resolution) for favorably reproducing the image P_img of the bioparticle P, it is necessary to set the event occurrence threshold to be sufficiently small. However, as illustrated in FIG. 9, there is a trade-off relationship between the event detection threshold and noise.

Therefore, when the event detection threshold is reduced, noise such as a false event or an event defect irrelevant to the luminance change of the image P_img increases. Note that the event detection threshold may be determined on the basis of, for example, at least one of the type of the biological sample S, the type of fluorescent dye that labels the bioparticle P, and the intensity of light (laser light) output from the light source unit 111.

However, as in the present embodiment, when the times of the respective event streams detected by the plurality of event pixels 20 in the same pixel column are aligned and then added together, a correct positive event and a correct negative event are enhanced, whereas a random false event and a random event defect are not enhanced. Therefore, an S/N ratio can be increased. As a result, even when the number of gradations is increased by decreasing the event detection threshold, it is possible to generate highly accurate bioparticle information regarding the bioparticle P. For example, it is possible to reconstruct a bioparticle image in which the image P_img of the bioparticle P is favorably reproduced.

### 3.5 Example of operation flow

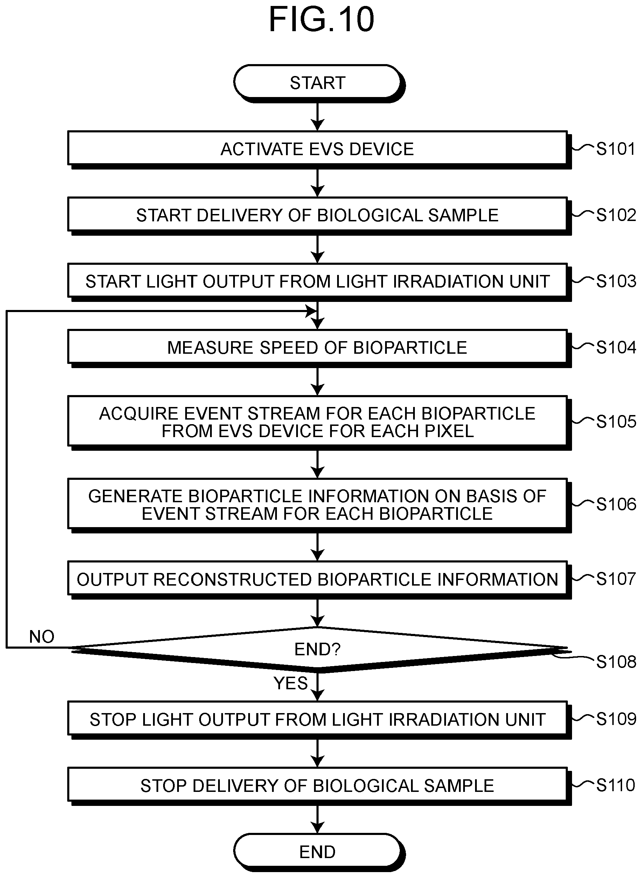

Next, an operation example executed by the biological sample analysis device 100 according to the present embodiment will be described. FIGS. 10 to 12 are each a flowchart illustrating an operation example according to the present embodiment. Note that execution of an operation described later may be controlled by a control unit (not illustrated) or the like that controls the biological sample analysis device 100.

As illustrated in FIG. 10, in the present operation, first, the EVS device 122 is activated (step S101), delivery of the biological sample S to the flow channel C is started (step S102), and light output from the light irradiation unit 101 is started (step S103). Note that the execution order of steps S101 to S103 may be changed.

As described above, when the delivery of the biological sample S to the flow channel C is started, in the present operation, the speed measurement unit 124 measures the speed of the bioparticle P flowing in the flow channel C (step S104). The measured speed of the bioparticle P is input to the event data processing unit 123.

A specific spot on the flow channel C is irradiated with light from the light irradiation unit 101. Therefore, when the bioparticle P contained in the biological sample S delivered to the flow channel C passes through the spot, fluorescence or scattered light is emitted from the spot, and transmitted light and reflected light are emitted. These beams of light emitted from the spot are incident on a light receiving surface of the EVS device 122 via the detection optical system 121. Therefore, each event pixel 20 in the EVS device 122 detects a luminance change due to an image of light emitted when the bioparticle P passes through the spot as a positive event and a negative event. Event data detected for each event pixel 20 is output from the EVS device 122 to the event data processing unit 123 as needed, that is, in an asynchronous manner.

Note that, since the event data including the polarity and the time stamp of the event that has occurred only in the event pixel 20 where the event has occurred is output as a stream (event stream) from the EVS device 122 to the event data processing unit 123, a data transfer amount can be largely reduced as compared with the TDI-CCD method, the TDI-CMOS method, or the like that outputs light reception amounts of all pixels. As a result, even when a data transfer band connecting the EVS device 122 to the event data processing unit 123 is the same bandwidth, imaging at a higher speed of the bioparticle P is possible.

The event data processing unit 123 generates an event stream for each bioparticle P on the basis of the event data for each event pixel 20 output from the EVS device 122 (step S105). Note that the event stream for each bioparticle P may be a set of event streams for each event pixel 20.

Then, the event data processing unit 123 generates bioparticle information of the bioparticle P that has passed through the spot on the flow channel C on the basis of the generated event stream for each bioparticle P (step S106), and outputs the reconstructed bioparticle information to the information processing unit 103 (step S107) .

Thereafter, it is determined whether or not to end the present operation (step S108), and if the present operation is not ended (NO in step S108), the process returns to step S104, and the subsequent operations are executed. Meanwhile, if the present operation is ended (YES in step S108), the light output from the light irradiation unit 101 is stopped (step S109), the delivery of the biological sample S to the flow channel C is stopped (step S110), and the present operation is ended.

### 3.5.1 Example of event stream acquisition operation flow

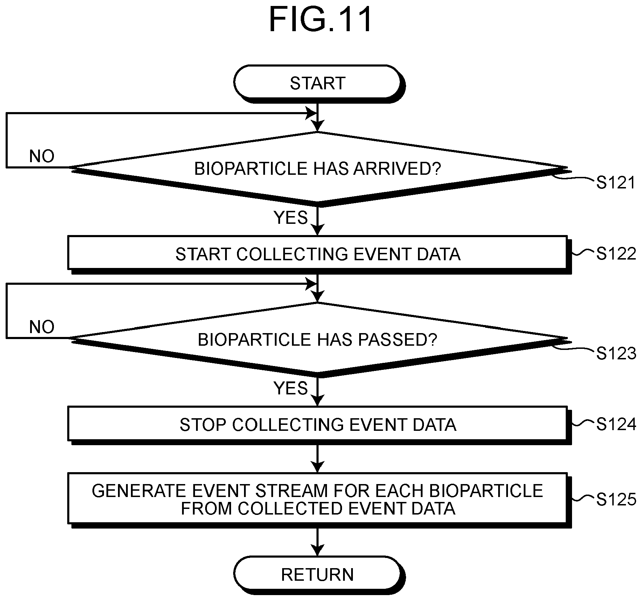

Next, the operation of acquiring the event stream described in step S105 of FIG. 10 will be described in more detail with reference to FIG. 11. FIG. 11 is a flowchart illustrating a more detailed operation example of the event stream acquisition operation illustrated in step S105 of FIG. 10.

As illustrated in FIG. 11, in the event stream acquisition operation illustrated in step S105 of FIG. 10, first, the event data processing unit 123 determines whether or not the bioparticle P has arrived at the spot on the flow channel C by monitoring a column of event data (event stream) input from the EVS device 122 (step S121). Note that the event stream may be constantly monitored by the event data processing unit 123 after the operation illustrated in FIG. 10 is started.

If the bioparticle P arrives at the spot on the flow channel C (YES in step S122), the event data processing unit 123 starts collecting event data including event data indicating arrival of the bioparticle P after arrival of the bioparticle P (step S123). Note that all pieces of the event data input from the EVS device 122 may be accumulated in a predetermined memory area separately from the collection of the event data in step S123.

Thereafter, the event data processing unit 123 determines whether or not the bioparticle P has finished passing through the spot on the flow channel C by monitoring a column of event data (event stream) input from the EVS device 122 (step S123). Then, if the bioparticle P has finished passing through the spot on the flow channel C (YES in step S123), the event data processing unit 123 stops collecting the event data (step S124), and generates an event stream for each bioparticle P that has passed through the spot on the flow channel C from the collected event data for each event pixel 20 (step S125). Thereafter, the process returns to the operation illustrated in FIG. 10.

### 3.5.2 Example of bioparticle information generation operation flow

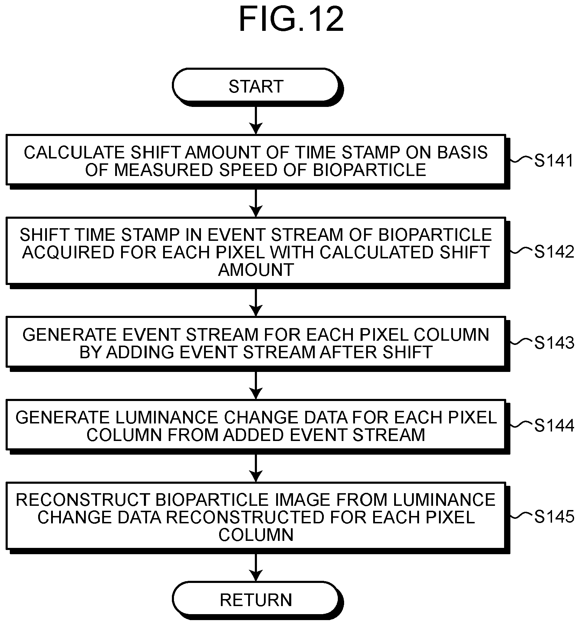

Next, the operation of generating bioparticle information described in step S106 of FIG. 10 will be described in more detail with reference to FIG. 12. FIG. 12 is a flowchart illustrating a more detailed operation example of the bioparticle information generation operation illustrated in step S106 of FIG. 10. Note that, in the following description, reconstruction of a bioparticle image is exemplified as the generation of the bioparticle information, but the present disclosure is not limited thereto. The bioparticle image may be replaced with a feature amount, attribute information, or the like regarding the bioparticle P, or the feature amount, the attribute information, or the like regarding the bioparticle P may be generated in addition to the bioparticle image.

As illustrated in FIG. 12, in the bioparticle information generation operation illustrated in step S106 of FIG. 10, first, the event data processing unit 123 calculates a shift amount for aligning times of the event streams for each event pixel 20 from the speed of the bioparticle P measured in step S104 of FIG. 10 (step S141).

Next, the event data processing unit 123 shifts the time stamp of each piece of event data included in the event stream of the bioparticle P acquired for each event pixel 20 in step S105 of FIG. 10 using the shift amount calculated in step S141 (step S142). As a result, the times of the event streams for each event pixel 20 are aligned to the same time (see FIG. 6).

Next, the event data processing unit 123 generates an event stream for each pixel column by adding the event streams for each event pixel 20 in which times are aligned (step S143). As a result, in each pixel column, a correct positive event and a correct negative event detected according to the luminance change are accumulated, and a random false event and a random event defect are not accumulated (see FIG. 7).

Next, the event data processing unit 123 generates luminance change data for each pixel column as illustrated in FIG. 8 by converting the number of events at each time in the event stream added in step S143 into a luminance value (step S144). At this time, various methods such as a method for generating luminance change data using all pieces of event data including a false event and an event defect, and a method for providing a threshold of the number of events for the positive event and/or the negative event and extracting a piece of data in which the number of events is larger than the threshold from the event data at each time to generate luminance change data may be used.

Next, the event data processing unit 123 reconstructs the bioparticle image including the image of the bioparticle P by performing arrangement in a luminance change data row direction for each pixel column generated in step S144 (step S145). Thereafter, the process returns to the operation illustrated in FIG. 10.

### 3.6 Example of specific numerical value

Next, effects according to the present embodiment will be described by exemplifying specific numerical values. Note that the data size per event output from the EVS device 122 varies depending on a compression method, but in the following description, a case where trial calculation is performed in an example of general row direction compression will be exemplified. Note that, in the case of the row direction compression, it is advantageous to make the moving direction of the bioparticle P coincide with the row direction instead of the column direction from a viewpoint of compression of a data amount, but the present disclosure is not limited thereto, and the moving direction of the bioparticle P may coincide with the column direction.

In addition, in the following description, a specific numerical value is estimated on the assumption of the following items.
- Number of bits per signal: 8 bits in TDI-CCD method; 4 bits in TDI-EVS method (note that it is assumed that eight events occur per 32 bits).
- Number of pixels reacting: All 1000 pixels in TDI-CCD method; 100 pixels out of 1000 pixels in TDI-EVS method
- Frame rate: A frame rate in TDI-CCD method is the same as a frame rate in TDI-EVS method (EVS is an imaging element excellent in high-speed performance, but the same frame rate is assumed here in order to consider compression efficiency between different methods)

On the above assumption, a data amount per frame is 8000 bits in the TDI-CCD method, whereas the data amount per frame is 400 bits, which is a value reduced to 1/20 times, in the TDI-EVS method according to the present embodiment. As described above, since the data transfer amount can be largely reduced as compared with the TDI-CCD system that outputs light reception amounts of all pixels, imaging at a higher speed of the bioparticle P is possible.

### 3.7 Summary

As described above, according to the present embodiment, the EVS is used as a sensor for acquiring bioparticle information. As a result, a data size of bioparticle information to be transferred can be largely reduced. Therefore, the limitation on the number of samples that can be observed per unit time is largely relaxed, and as a result, redundancy of analysis time can be suppressed.

In addition, in the present embodiment, by implementing an imaging method similar to the TDI method using EVS, it is possible to acquire highly accurate bioparticle information in which there is no blur due to movement of the bioparticle P and random noise having no correlation with the speed of the bioparticle P is reduced. As a result, it is possible to improve analysis accuracy while suppressing redundancy of analysis time.

### 3.8 Modification

Next, some modifications of the above-described embodiment will be described.

### 3.8.1 First modification

In a first modification, multicoloring of an image of the bioparticle P to be acquired will be described. For example, when the bioparticle P is stained with a plurality of fluorescent dyes and the light source unit 111 outputs light in a plurality of wavelength ranges corresponding to the plurality of staining dyes, respectively, fluorescence emitted from the bioparticle P is light in a plurality of wavelength ranges (multispectrum). In such a case, it is possible to generate bioparticle information of the bioparticle P for each fluorescent dye (for example, an image of the bioparticle P (bioparticle image) for each fluorescent dye) by separating the fluorescence emitted from the bioparticle P for each wavelength range.

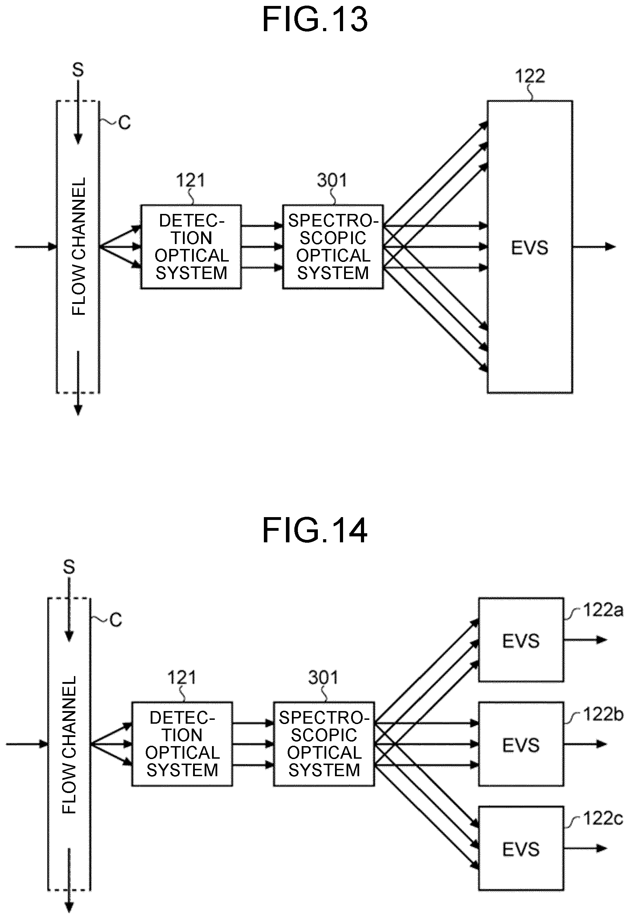

As a method for separating the fluorescence emitted from the bioparticle P for each wavelength range, a method for separating fluorescence for each wavelength range by a spectroscopic optical system is considered. FIG. 13 is a block diagram illustrating a partial configuration example of a biological sample analysis device according to the first modification. Note that a component not illustrated in FIG. 13 may be similar to the component described above with reference to FIG. 2.

As illustrated in FIG. 13, in the first modification, a spectroscopic optical system 301 that separates light emitted from the bioparticle P passing through the spot of the flow channel C for each wavelength range is disposed on an optical path between the detection optical system 121 and the EVS device 122. The spectroscopic optical system 301 spatially separates the light emitted from the bioparticle P for each wavelength range by changing an optical path of reflected light, transmitted light, scattered light, and/or fluorescence from the bioparticle P according to a wavelength range thereof. The separated beams of light are imaged at different positions on a light receiving surface of the EVS device 122. Note that the EVS device 122 according to the present modification may have a light receiving surface that is long in the light separation direction by the spectroscopic optical system 301.

As described above, the beams of light separated by the spectroscopic optical system 301 are received in different regions of the EVS device 122, and the bioparticle information is generated on the basis of events detected in the respective regions, whereby multicoloring of the bioparticle information to be analyzed is possible. Then, due to this multicoloring, for example, a bioparticle image in which a bright field image by reflected light of the bioparticle P or a dark field image by transmitted light and fluorescent images corresponding to a plurality of fluorescent dyes are superimposed on each other can be constructed, and higher-dimensional analysis of the bioparticle P is thereby possible.

Note that the event detection threshold of the event pixel 20 belonging to a region where each of the separated beams of light is incident may vary depending on the region. As a result, it is possible to set an event detection threshold according to a light amount, and thus, it is possible to more accurately acquire bioparticle information for each fluorescent dye.

The event detection threshold for each region for the EVS device 122 may be set in the EVS device 122 by the event data processing unit 123 on the basis of, for example, a luminance average of wavelength components in the previous one or more pieces of bioparticle information, or may be set in the EVS device 122 in advance by, for example, user setting.

### 3.8.2 Second modification

In the first modification, the case where spatially separated beams of light are received in different regions of one EVS device 122 by lengthening the light receiving surface of the EVS device 122 in the light separation direction by the spectroscopic optical system 301 has been exemplified Note that the present disclosure is not limited to such a configuration, and for example, as illustrated in FIG. 14, the spatially separated beams of light may be received by individual EVS devices 122a to 122c, respectively. Even with such a configuration, similarly to the first modification, multicoloring of the bioparticle information is possible, and thus, higher-dimensional analysis of the bioparticle P is possible.

### 3.8.3 Third modification

In the third modification, a case where a region of interest (ROI) is set in the pixel array unit 201 will be exemplified. A region through which the image P_img (see, for example, FIG. 4) of the bioparticle P passes with respect to the pixel array unit 201 of the EVS device 122 (including the EVS devices 122a to 122c) is a partial region (passage region) of the pixel array unit 201. The passage region is limited in the flow channel C.

In such a case, it is possible to further reduce the amount of data transferred from the EVS device 122 to the event data processing unit 123 by setting the ROI in a region corresponding to the region in the flow channel C in the pixel array unit 201 and executing an event detection operation only on this region. This makes it possible to increase the speed of the bioparticle P passing through the flow channel C.

For example, when the moving direction of the bioparticle P corresponds to the column direction of the pixel array unit 201, by setting the ROI in a direction perpendicular to the moving direction of the bioparticle P, that is, in the row direction so as to exclude a pixel column deviated from the region corresponding to the region in the flow channel C from a driving target, it is possible to eliminate event data which is noise from the pixel column deviated from the region corresponding to the region in the flow channel C.

In addition, the ROI may be set in a direction parallel to the moving direction of the bioparticle P. For example, when the moving direction of the bioparticle P corresponds to the column direction of the pixel array unit 201, the ROI may be set in the column direction such that the number of pixels in each pixel column is reduced. In this case, since the amount of data transfer from the EVS device 122 to the event data processing unit 123 and the amount of data to be processed by the event data processing unit 123 can be reduced, the speed of the bioparticle P passing through the flow channel C can be further increased.

Note that, when the ROI is set in a direction parallel to the moving direction of the bioparticle P, although the number of event streams to be superimposed decreases, the EVS itself can reconstruct an image with a favorable image quality even in a dark place. Therefore, it can be expected that an influence on the generated bioparticle information (for example, bioparticle image) is sufficiently small.

In addition, the ROI may be set in the direction parallel to the moving direction of the bioparticle P according to a supply speed of the biological sample S to the flow channel C, that is, the speed of the bioparticle P passing through the flow channel C. For example, when the speed of the bioparticle P passing through the flow channel C is high, the ROI may be set such that the number of pixels of each pixel column is further reduced, and when the speed of the bioparticle P passing through the flow channel C is low, the ROI may be set such that the number of pixels of each pixel column is increased.

The ROI may be set in the direction perpendicular to the moving direction of the bioparticle P, for example, on the basis of a passage region of the image P_img of the bioparticle P specified by the event data processing unit 123 from the previous event stream, or may be set in the EVS device 122 in advance by, for example, user setting. In addition, the ROI may be set in the direction parallel to the moving direction of the bioparticle P, for example, on the basis of the speed of the bioparticle P input from the speed measurement unit 124 by the event data processing unit 123, or may be set in the EVS device 122 in advance by, for example, user setting.

Note that the ROI to be set may be separated into two or more regions in the moving direction of the bioparticle P. In addition, the number of pixels in the moving direction of the bioparticle P in the ROI to be set may be one or more. When the ROI is set so as to be separated in two or more regions in the moving direction of the bioparticle P, the number of pixels in the moving direction of the bioparticle P in each ROI may be one or more.

In addition, two or more EVS devices may be disposed in the moving direction of the bioparticle P instead of setting the ROI so as to be separated in two or more regions in the moving direction of the bioparticle P. In this case, the number of pixels in the moving direction of the bioparticle P of each EVS device may be one or more.

### 3.8.4 Fourth modification

In the above-described embodiment and modifications thereof, the case of calculating the shift amount using the speed of the bioparticle P measured by the speed measurement unit 124 has been exemplified, but the present disclosure is not limited thereto. For example, the shift amount may be determined on the basis of a control value of a liquid delivery system that delivers the biological sample S to the flow channel C. In this case, for example, a value may be changed from the control value of the liquid delivery system to values around a shift amount assumed in advance, and a shift amount obtained when a bioparticle image in which a feature amount related to the smallness of blur such as contrast or sharpness is the highest among bioparticle images reconstructed with the respective values is reconstructed may be determined.

### 3.8.5 Fifth modification

In addition, in the above-described embodiment and modifications thereof, the configuration in which the bioparticle information of the bioparticle P is analyzed has been exemplified, but the present disclosure is not limited thereto. Instead of or in addition to the configuration in which the bioparticle information of the bioparticle P is analyzed, a configuration in which scattered light scattered by the bioparticle P passing through the spot on the flow channel C is detected may be included. In this case, the information processing unit 103 may analyze the bioparticle P on the basis of the detection result of the scattered light or the detection result of the scattered light and the bioparticle information.

### 3.8.6 Sixth modification

Furthermore, in the above-described embodiment and modifications thereof, the case where the TDI-EVS method according to the present embodiment is applied to the imaging flow cytometer has been exemplified, but the application destination of the TDI-EVS method according to the present embodiment is not limited thereto. The TDI-EVS method according to the present embodiment may be applied to various devices that image a subject moving in a certain direction at a constant speed with an EVS device. For example, the TDI-EVS method according to the present embodiment may be applied to an inspection device or the like that acquires a wide range of high-resolution images by scanning a surface of a subject such as a stationary large display panel (including a liquid crystal display, an organic electro luminescence (EL) display, and the like) or a semiconductor wafer with an EVS device. In this case, instead of the biological sample information, at least one of image data of a subject reconstructed from event data, a feature amount such as the shape, size, or color of the subject extracted from the event data and image data of the subject, attribute information indicating a scan speed, normality/abnormality, and the like with respect to the subject generated from the event data, the image data of the subject, the feature amount of the subject, and the like may be included.

### 4. Hardware configuration

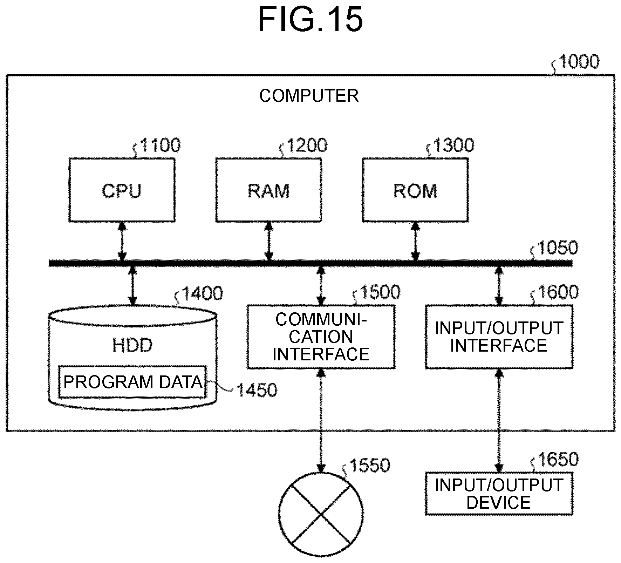

The event data processing unit 123 and/or the information processing unit 103 according to the above-described embodiment, modifications thereof, and application examples thereof can be implemented by a computer 1000, for example, having a configuration as illustrated in FIG. 15. FIG. 15 is a hardware configuration diagram illustrating an example of the computer 1000 that implements functions of the event data processing unit 123 and/or the information processing unit 103. The computer 1000 includes a CPU 1100, a RAM 1200, a read only memory (ROM) 1300, a hard disk drive (HDD) 1400, a communication interface 1500, and an input/output interface 1600. The units of the computer 1000 are connected to each other by a bus 1050.

The CPU 1100 operates on the basis of a program stored in the ROM 1300 or the HDD 1400, and controls the units. For example, the CPU 1100 develops a program stored in the ROM 1300 or the HDD 1400 in the RAM 1200, and executes processing corresponding to various programs.

The ROM 1300 stores a boot program such as a basic input output system (BIOS) executed by the CPU 1100 when the computer 1000 is activated, a program depending on hardware of the computer 1000, and the like.

The HDD 1400 is a computer-readable recording medium that non-transiently records a program executed by the CPU 1100, data used by the program, and the like. Specifically, the HDD 1400 is a recording medium that records a program for implementing operations according to the present disclosure, which is an example of the program data 1450.

The communication interface 1500 is an interface used for connecting the computer 1000 to an external network 1550 (for example, the Internet). For example, the CPU 1100 receives data from another device or transmits data generated by the CPU 1100 to another device via the communication interface 1500.

The input/output interface 1600 has a configuration including the I/F unit 18 described above, and is an interface for connecting an input/output device 1650 to the computer 1000. For example, the CPU 1100 receives data from an input device such as a keyboard or a mouse via the input/output interface 1600. In addition, the CPU 1100 transmits data to an output device such as a display, a speaker, or a printer via the input/output interface 1600. In addition, the input/output interface 1600 may function as a medium interface that reads a program or the like recorded in a predetermined recording medium (medium). The medium is, for example, an optical recording medium such as a digital versatile disc (DVD) or a phase change rewritable disk (PD), a magneto-optical recording medium such as a magneto-optical disk (MO), a tape medium, a magnetic recording medium, or a semiconductor memory.

For example, when the computer 1000 functions as the event data processing unit 123 and/or the information processing unit 103 according to the above-described embodiment, the CPU 1100 of the computer 1000 executes a program loaded on the RAM 1200 to implement the functions of the event data processing unit 123 and/or the information processing unit 103. In addition, the HDD 1400 stores a program and the like according to the present disclosure. Note that the CPU 1100 reads the program data 1450 from the HDD 1400 and executes the program, but as another example, these programs may be acquired from another device via the external network 1550.

Although the embodiment of the present disclosure has been described above, the technical scope of the present disclosure is not limited to the above-described embodiment as it is, and various modifications can be made without departing from the gist of the present disclosure. In addition, components of different embodiments and modifications may be appropriately combined with each other.

In addition, the effects of the embodiment described here are merely examples and are not limited, and other effects may be provided.

Note that the present technology can also have the following configurations.
(1) A biological sample analysis system including:
   an irradiation unit that irradiates a bioparticle in a biological sample with light;
   a detection unit including a plurality of pixels that each detects, as an event, a luminance change of light emitted from the bioparticle by irradiation with the light; and
   a processing unit that generates bioparticle information regarding the bioparticle on a basis of the event detected by each of the pixels.
(2) The biological sample analysis system according to (1), wherein
   the bioparticle moves in a first direction with respect to the detection unit,
   the plurality of pixels includes two or more first pixels arranged adjacent to or separated from each other in the first direction,
   the detection unit outputs event data including information of time at which an event has been detected in each of the pixels, and
   the processing unit aligns the pieces of information of time of a series of event data for each of the first pixels output from the detection unit by detecting the luminance change of light emitted from the bioparticle by each of the first pixels, and generates the bioparticle information by processing the series of event data from each of the first pixels with the pieces of information of time aligned.
(3) The biological sample analysis system according to (2), wherein
   the event data further includes at least one of position information of a pixel that has detected the event and polarity information of the event detected in the pixel.
(4) The biological sample analysis system according to (2) or (3), wherein
   the processing unit aligns the pieces of information of time of the series of event data for each of the first pixels on a basis of a relative speed of the bioparticle with respect to the detection unit and an interval between the first pixels in the first direction.
(5) The biological sample analysis system according to (4), further including a speed measurement unit that measures the relative speed of the bioparticle with respect to the detection unit.
(6) The biological sample analysis system according to (2) or (3), wherein
   the processing unit aligns the pieces of information of time of the series of event data for each of the first pixels on a basis of a difference in time at which each of the first pixels has detected the luminance change of light emitted from the bioparticle.
(7) The biological sample analysis system according to (6), wherein
   the processing unit aligns the pieces of information of time of the series of event data for each of the first pixels on a basis of a difference in time at which each of the first pixels has detected the luminance change of light emitted from the bioparticle in two or more pixel columns parallel to the first direction.
(8) The biological sample analysis system according to (2) or (3), wherein
   the biological sample containing the bioparticle is delivered to a predetermined flow channel, and
   the processing unit aligns the pieces of information of time of the series of event data for each of the first pixels on a basis of a control value of a liquid delivery system that delivers the biological sample to the predetermined flow channel.
(9) The biological sample analysis system according to any one of (2) to (8), wherein
   the processing unit generates the bioparticle information on a basis of a result of adding or dividing the series of event data for each of the first pixels in which the pieces of information of time are aligned on a time axis.
(10) The biological sample analysis system according to (9), wherein
   the processing unit reconstructs the luminance change of light emitted from the bioparticle on a basis of the result of adding or dividing the series of event data for each of the first pixels in which the pieces of information of time are aligned on a time axis, and generates the bioparticle information on a basis of the reconstructed luminance change.
(11) The biological sample analysis system according to (10), wherein
   the processing unit reconstructs the luminance change of light emitted from the bioparticle for each of the first pixels for each of two or more pixel columns parallel to the first direction, and generates the bioparticle information on a basis of the luminance change for each of the first pixels in each of the two or more reconstructed pixel columns.
(12) The biological sample analysis system according to any one of (1) to (3), wherein
   the processing unit generates the bioparticle information using machine learning from a series of event data for each of the pixels output from the detection unit by detecting the luminance change of light emitted from the bioparticle by each of the pixels.
(13) The biological sample analysis system according to any one of (1) to (12), wherein
   the bioparticle information includes at least one of image data of the bioparticle reconstructed on a basis of the detected event, a feature amount of the bioparticle extracted from at least one of the detected event and the image data, and attribute information of the bioparticle generated from at least one of the event, the image data, and the feature amount.
(14) The biological sample analysis system according to any one of (1) to (13), wherein the bioparticle is a cell or a non-cellular bioparticle.
(15) The biological sample analysis system according to any one of (1) to (14), wherein
   the irradiation unit irradiates a predetermined spot on a flow channel with the light, and
   the bioparticle moves in the flow channel so as to pass through the predetermined spot.
(16) The biological sample analysis system according to any one of (1) to (5), further including a spectroscopic optical system that disperses light emitted from the bioparticle, wherein
   the bioparticle is labeled with one or more fluorescent dyes,
   the irradiation unit irradiates the bioparticle with the light including excitation light in one or more wavelength ranges, and
   the detection unit detects a luminance change of each of the beams of light dispersed by the spectroscopic optical system as an event.
(17) The biological sample analysis system according to (16), wherein
   the detection unit includes a plurality of detection units disposed for the beams of light dispersed by the spectroscopic optical system on a one-to-one basis.
(18) An information processing device including a processing unit that generates subject information regarding a subject on a basis of an event detected in each of a plurality of pixels that detects a luminance change of light from the subject as the event in a detection unit including the pixels.
(19) An information processing method including generating subject information regarding a subject on a basis of an event detected in each of a plurality of pixels that detects a luminance change of light from the subject as the event in a detection unit including the pixels.
(20) A biological sample analysis method including:
   irradiating a bioparticle in a biological sample with light;
   detecting, as an event, a luminance change of light emitted from the bioparticle by irradiation with the light in each of a plurality of pixels; and
   generating bioparticle information regarding the bioparticle on a basis of the event detected by each of the pixels.

### Reference Signs List

- 100: BIOLOGICAL SAMPLE ANALYSIS DEVICE
- 101: LIGHT IRRADIATION UNIT
- 102: DETECTION UNIT
- 103: INFORMATION PROCESSING UNIT
- 104: EXTRACTION UNIT
- 111: LIGHT SOURCE UNIT
- 112: LIGHT GUIDE OPTICAL SYSTEM
- 121: DETECTION OPTICAL SYSTEM
- 122, 122a to 122c: EVS DEVICE
- 123: EVENT DATA PROCESSING UNIT
- 124: SPEED MEASUREMENT UNIT
- 301: SPECTROSCOPIC OPTICAL SYSTEM
- C: FLOW CHANNEL
- P: BIOPARTICLE
- P_img: IMAGE
- S: BIOLOGICAL SAMPLE

## Claims

1. A biological sample analysis system including:
an irradiation unit that irradiates a bioparticle in a biological sample with light;
a detection unit including a plurality of pixels that each detects, as an event, a luminance change of light emitted from the bioparticle by irradiation with the light; and
a processing unit that generates bioparticle information regarding the bioparticle on a basis of the event detected by each of the pixels.

2. The biological sample analysis system according to claim 1, wherein
the bioparticle moves in a first direction with respect to the detection unit,
the plurality of pixels includes two or more first pixels arranged adjacent to or separated from each other in the first direction,
the detection unit outputs event data including information of time at which an event has been detected in each of the pixels, and
the processing unit aligns the pieces of information of time of a series of event data for each of the first pixels output from the detection unit by detecting the luminance change of light emitted from the bioparticle by each of the first pixels, and generates the bioparticle information by processing the series of event data from each of the first pixels with the pieces of information of time aligned.

3. The biological sample analysis system according to claim 2, wherein
the event data further includes at least one of position information of a pixel that has detected the event and polarity information of the event detected in the pixel.

4. The biological sample analysis system according to claim 2, wherein
the processing unit aligns the pieces of information of time of the series of event data for each of the first pixels on a basis of a relative speed of the bioparticle with respect to the detection unit and an interval between the first pixels in the first direction.

5. The biological sample analysis system according to claim 4, further including a speed measurement unit that measures the relative speed of the bioparticle with respect to the detection unit.

6. The biological sample analysis system according to claim 2, wherein
the processing unit aligns the pieces of information of time of the series of event data for each of the first pixels on a basis of a difference in time at which each of the first pixels has detected the luminance change of light emitted from the bioparticle.

7. The biological sample analysis system according to claim 6, wherein
the processing unit aligns the pieces of information of time of the series of event data for each of the first pixels on a basis of a difference in time at which each of the first pixels has detected the luminance change of light emitted from the bioparticle in two or more pixel columns parallel to the first direction.

8. The biological sample analysis system according to claim 2, wherein
the biological sample containing the bioparticle is delivered to a predetermined flow channel, and
the processing unit aligns the pieces of information of time of the series of event data for each of the first pixels on a basis of a control value of a liquid delivery system that delivers the biological sample to the predetermined flow channel.

9. The biological sample analysis system according to claim 2, wherein
the processing unit generates the bioparticle information on a basis of a result of adding or dividing the series of event data for each of the first pixels in which the pieces of information of time are aligned on a time axis.

10. The biological sample analysis system according to claim 9, wherein
the processing unit reconstructs the luminance change of light emitted from the bioparticle on a basis of the result of adding or dividing the series of event data for each of the first pixels in which the pieces of information of time are aligned on a time axis, and generates the bioparticle information on a basis of the reconstructed luminance change.

11. The biological sample analysis system according to claim 10, wherein
the processing unit reconstructs the luminance change of light emitted from the bioparticle for each of the first pixels for each of two or more pixel columns parallel to the first direction, and generates the bioparticle information on a basis of the luminance change for each of the first pixels in each of the two or more reconstructed pixel columns.

12. The biological sample analysis system according to claim 1, wherein
the processing unit generates the bioparticle information using machine learning from a series of event data for each of the pixels output from the detection unit by detecting the luminance change of light emitted from the bioparticle by each of the pixels.

13. The biological sample analysis system according to claim 1, wherein
the bioparticle information includes at least one of image data of the bioparticle reconstructed on a basis of the detected event, a feature amount of the bioparticle extracted from at least one of the detected event and the image data, and attribute information of the bioparticle generated from at least one of the event, the image data, and the feature amount.

14. The biological sample analysis system according to claim 1, wherein the bioparticle is a cell or a non-cellular bioparticle.

15. The biological sample analysis system according to claim 1, wherein
the irradiation unit irradiates a predetermined spot on a flow channel with the light, and
the bioparticle moves in the flow channel so as to pass through the predetermined spot.

16. The biological sample analysis system according to claim 1, further including a spectroscopic optical system that disperses light emitted from the bioparticle, wherein
the bioparticle is labeled with one or more fluorescent dyes,
the irradiation unit irradiates the bioparticle with the light including excitation light in one or more wavelength ranges, and
the detection unit detects a luminance change of each of the beams of light dispersed by the spectroscopic optical system as an event.

17. The biological sample analysis system according to claim 16, wherein
the detection unit includes a plurality of detection units disposed for the beams of light dispersed by the spectroscopic optical system on a one-to-one basis.

18. An information processing device including a processing unit that generates subject information regarding a subject on a basis of an event detected in each of a plurality of pixels that detects a luminance change of light from the subject as the event in a detection unit including the pixels.

19. An information processing method including generating subject information regarding a subject on a basis of an event detected in each of a plurality of pixels that detects a luminance change of light from the subject as the event in a detection unit including the pixels.

20. A biological sample analysis method including:
irradiating a bioparticle in a biological sample with light;
detecting, as an event, a luminance change of light emitted from the bioparticle by irradiation with the light in each of a plurality of pixels; and
generating bioparticle information regarding the bioparticle on a basis of the event detected by each of the pixels.
